# EUROPÄISCHE PATENTSCHRIFT

(11) **EP 1 167 168 B1**
(45) Veröffentlichungstag und Bekanntmachung des Hinweises auf die Patenterteilung: **12.11.2003**
(21) Anmeldenummer: 01250231.6
(22) Anmeldetag: 22.06.2001
(51) Int. Cl.: B62D 55/084

(54) **Führung für eine Endloskette eines Raupenfahrwerkes**
Guide for the endless track of a tracked vehicle
Dispositif de guidage pour la chaîne sans fin d'un véhicule à chenilles

(30) Priorität: 26.06.2000 DE 10031021
(43) Veröffentlichungstag der Anmeldung: 02.01.2002
(73) Patentinhaber: Terex-Demag GmbH & Co. KG, 66482 Zweibrücken (DE)
(72) Erfinder: Nöske, Ingo, 66482 Zweibrücken (DE); Rutz, Werner, 66851 Queidersbach (DE)
(74) Vertreter: Meissner, Peter E., Dipl.-Ing.

(56) Entgegenhaltungen:
- DE-A- 2 905 991
- US-A- 4 082 371
- US-A- 4 583 791
- PATENT ABSTRACTS OF JAPAN vol. 1997, no. 11, 28. November 1997 (1997-11-28) -& JP 09 188278 A (ISEKI &CO LTD), 22. Juli 1997 (1997-07-22)

## Beschreibung

Die Erfindung betrifft eine Führung für eine mehrere Kettenglieder aufweisende Endloskette eines Raupenfahrwerkes insbesondere für Krane gemäß dem Oberbegriff des Patentanspruches 1.

Eine gattungsbildende Führung ist aus der DE 29 05 991 A1 bekannt. Das Raupenfahrwerk besteht aus einem Fahrwerksträger, einem mit Kettenzähnen versehenen Antriebsturas, einem Leitrad, einer mehrere Kettenglieder aufweisenden Endloskette, mehrere Laufrollen sowie einer Führung für die Endloskette. Jedes Kettenglied weist zwei symmetrisch zur Mitte des Kettengliedes und im Abstand voneinander angeordnete, in Laufrichtung liegende Führungsstege auf und zwischen beiden Führungsstegen ist ein die beiden Stege verbindendes tiefer liegendes Element angeordnet, das mit den Kettenzähnen des Antriebsturas kämmt. Die Führung weist einen über den Untertrum sich erstreckenden U-förmigen Träger auf, an dessen unterem Endbereich über Bolzen lösbar einzelne langgestreckte Schienen befestigt sind, die in Befestigungsblöcken gehalten werden. Im Führungsfall kommt die Innenseite der Schienen an der Außenseite der Führungsstege zu Anlage.

Diese bekannte Ausführung ist konstruktiv sehr aufwendig und bedeutet viel totes Gewicht. Außerdem wird dadurch die Montage und Demontage der Laufrollen erschwert.

Aufgabe der Erfindung ist es, eine Führung für eine mehrere Kettenglieder aufweisende Endloskette eines Raupenfahrwerkes anzugeben, die kompakt ausgebildet ist und weniger Gewicht bedeutet. Außerdem soll die Montage und Demontage der Laufrollen durch die Führung nicht erschwert werden.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist die unmittelbar vor oder hinter dem Antriebsturas angeordnete Führung als kompaktes Verschwenkteil ausgebildet und in einem Gestellteil des Fahrwerksträger befestigt. Als Schienen weist es zwei langgestreckte Stege auf, die bei Arbeitsstellung des Verschwenkteiles mindestens in Höhe des oberen Bereiches der Führungsstege der einzelnen Kettenglieder liegen.

Diese Anordnung hat den Vorteil, dass sie kleinbauend ist und in dem Zwischenraum zwischen der letzen Laufrolle und dem Antriebsturas problemlos unterzubringen ist. Die seitlichen Kräfte werden von Lagerböcken aufgenommen, während das in einer Aufnahme angeordnete Gummifederelement ein Klappern des Verschwenkteiles auf der Endloskette verhindert. Die Verschwenkbarkeit hat den Vorteil, dass beim Scharnieren eines Kettengliedes nach oben das Verschwenkteil dieser Bewegung nachgeben kann. Ein besonderes Augenmerk wurde auf die Erkennbarkeit des Zustandes der Verschleißbleche gelegt. Die Befestigungschrauben sind durch die Stege hindurchgesteckt und in die Verschleißbleche eingeschraubt. Sind die Verschleißbleche abgearbeitet, dann sind auch die Endbereiche der Befestigungsschrauben abgeschliffen. Die Befestigungsschrauben haben dann keinen Halt mehr und fallen durch die Bewegung des Raupenfahrwerkes nach und nach durch die Bohrung der Stege heraus. Dies ist bei einer üblichen Tagesinspektion sofort erkennbar, wobei als Abhilfe neue Verschleißbleche mit neuen Befestigungsschrauben montiert werden können.

Weitere Merkmale, Vorteile und Einzelheiten der Erfindung ergeben sich aus der nachfolgenden Beschreibung von einem in einer Zeichnung dargestellten Ausführungsbeispiel. Es zeigen:
- Figur 1: in einem Teillängsschnitt einen Teilaspekt eines Raupenfahrwerkes mit einer erfindungsgemäß ausgebildeten Führung in Arbeitsstellung.
- Figur 2: wie Figur 1, aber die Führung in geschwenkter Stellung
- Figur 3: einen Querschnitt entlang der Linie A-A in Figur 2
- Figur 4a-c: im Detail das Verschwenkteil

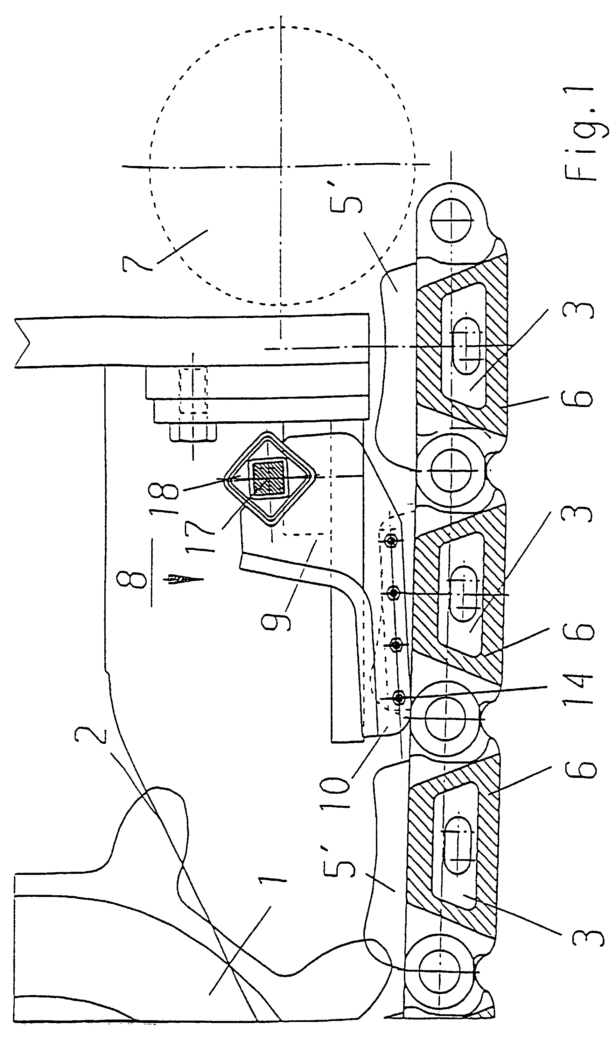

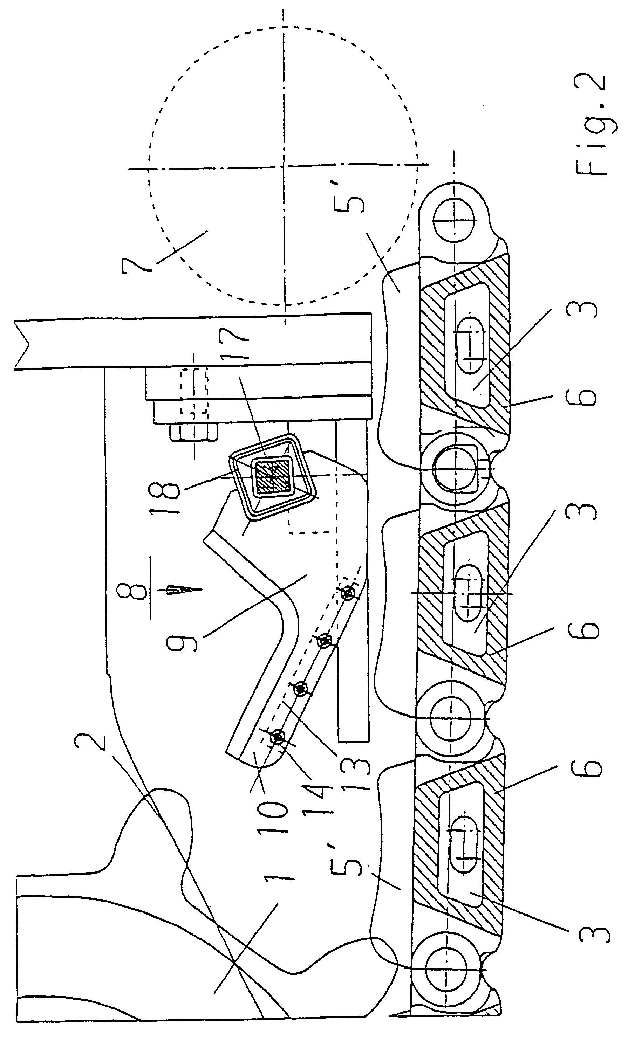

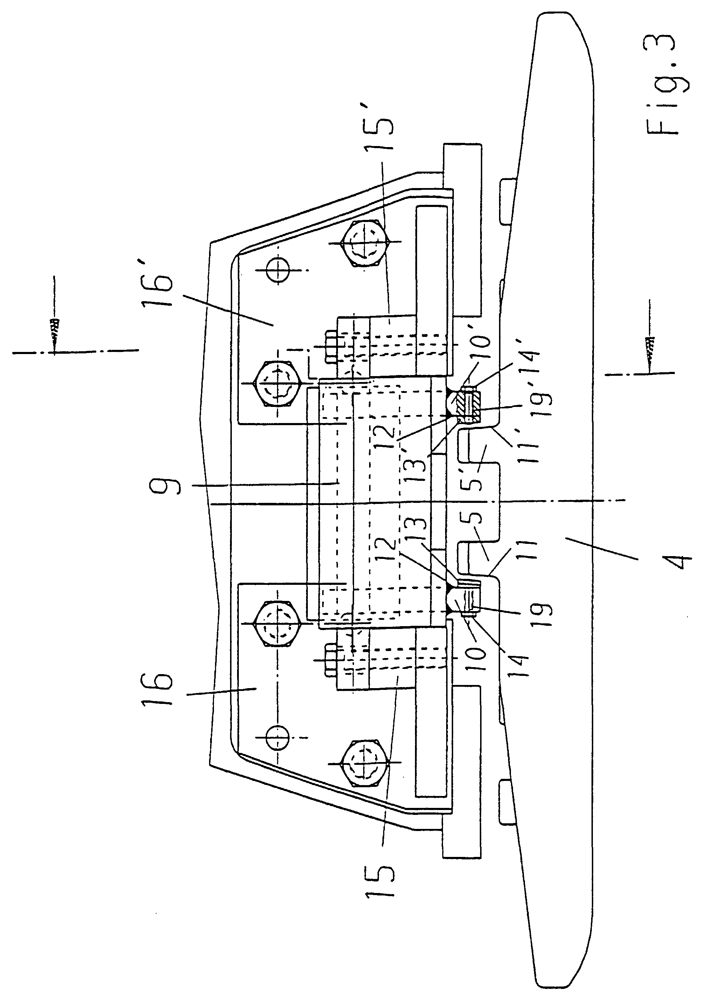

In den Figuren 1 und 2 ist in einem Teillängsschnitt und in Figur 3 in einem Querschnitt ein Raupenfahrwerk mit einer erfindungsgemäß ausgebildeten Führung einmal in Arbeitsstellung und einmal in geschwenkter Stellung dargestellt.

In der Darstellung gemäß Figur 1 ist ein Teil des Antriebsturas 1 mit den daran angeordneten Kettenzähnen 2 zu erkennen. Diese kämmen mit den Kettengliedern 3 einer Endloskette zusammen. Das mit einer Bodenplatte 4 (Figur 3) versehene Kettenglied 3 weist zwei in der Mitte und im Abstand voneinander angeordnete Führungsstege 5,5' auf, zwischen denen tiefer liegend ein nockenartiges Element 6 angeordnet ist, das mit den Kettenzähnen 2 des Antriebsturas 1 kämmt.

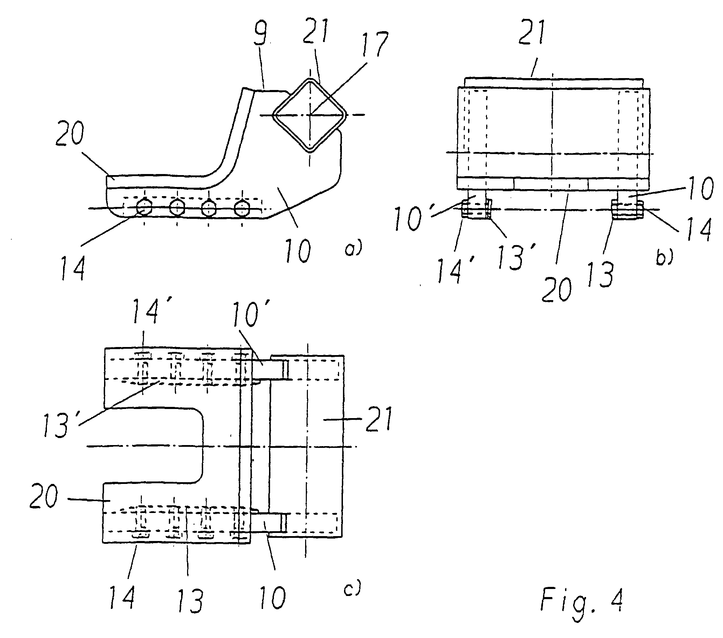

Mit gestrichelten Linien ist, die letzte noch vor dem Antriebsturas 1 anzuordnende Laufrolle 7 zur Führung der Endloskette angedeutet. In dem verbleibenden Zwischenraum zwischen der letzten Laufrolle 7 und dem Antriebsturas 1 ist erfindungsgemäß eine Führung 8 zur Führung der Endloskette vorgesehen. Diese besteht aus einem Verschwenkteil 9, dessen Tragkörper 20 (Fig. 4) schuhartig ausgebildet ist mit zwei parallel sich erstreckenden Stegblechen 10,10' (Figur 3). Diese Stegbleche 10,10' sind rechts und links auf der jeweiligen Außenseite 11,11' der Führungsstege 5,5' des jeweiligen Kettengliedes 3 angeordnet. Auf der Innenseite 12,12' der Stegbleche 10,10' sind Verschleißbleche 13,13' mittels Schrauben 14,14' befestigt. Wenn das Verschwenkteil 9 gemäß der Darstellung Figur 1 in Arbeitsstellung geschwenkt ist, kommen im Führungsfall das jeweilige Verschleißblech 13,13' an der Außenseite 11,11' des jeweiligen Führungssteges 5,5' zur Anlage. Das Verschwenkteil 9 ist in Lagerböcken 15,15' gelagert, die an einem Gestellteil 16,16' befestigt sind. Um ein Klappern des Verschwenkteiles 9 auf der Endloskette zu vermeiden, ist in der Achse 17 des Verschwenkteiles 9 eine Aufnahme 21 befestigt. In diese Aufnahme 21 ist ein Gummifederelement 18 anordenbar. Zu erwähnen ist noch die leichte Erkennbarkeit des Zustandes der Verschleißbleche 13,13'. Sind diese abgenutzt, dann ist auch der Gewindeteil der jeweiligen Schraube 14,14' abgeschliffen. Da die Schrauben 14,14' dann keinen Halt mehr haben, fallen sie durch die Rüttelbewegung des Raupenfahrwerkes aus der Bohrung 19,19' der Stegbleche 10,10' heraus. Dies ist durch eine normale Tagesinspektion sofort zu erkennen.

In den Figuren 4a - 4c ist in einer Seitenansicht, einer Vorder- und in einer Draufsicht das Verschwenkteil 9 als Einzelelement dargestellt. Es besteht aus einem schuhartig gebogenen, zwei Arme aufweisenden Tragkörper 20, auf dessen Unterseite die im Abstand voneinander angeordneten Stegbleche 10, 10' befestigt sind. Wie schon erwähnt können im gerade verlaufenden Abschnitt der Stegbleche 10, 10' lösbar mittels Schrauben 14,14' Verschleißbleche 13, 13' befestigt werden. Im rechten oberen Endbereich der beiden Stegbleche 10, 10' ist eine Aufnahme 21 befestigt, in die das Gummifederelement 18 anordenbar ist. Alternativ ist es auch möglich, das Gummifederelement 18 direkt am Verschwenkteil 9 zu befestigen.

### Bezugszeichenliste

| | |
|---|---|
| 1 | Antriebsturas |
| 2 | Kettenzahn |
| 3 | Kettenglied |
| 4 | Bodenplatte |
| 5,5' | Führungssteg |
| 6 | Nockenartiges Element |
| 7 | Laufrolle |
| 8 | Führung |
| 9 | Verschwenkteil |
| 10,10' | Stegblech |
| 11,11' | Außenseite der Führungsstege |
| 12,12' | Innenseite der Stege |
| 13,13' | Verschleißblech |
| 14,14' | Schraube |
| 15,15' | Lagerbock |
| 16,16' | Gestellteil |
| 17 | Achse Verschwenkteil |
| 18 | Gummifederelement |
| 19,19' | Bohrung Steg |
| 20 | Tragkörper |
| 21 | Aufnahme |

## Patentansprüche

1. Führung (8) für eine mehrere Kettenglieder (3) aufweisende Endloskette eines Raupenfahrwerkes, insbesondere für Krane, das einen Fahrwerksträger, mindestens einen mit Kettenzähnen (2) versehenen Antriebsturas (1), ggf. ein Leitrad und mehrere Laufrollen (7) aufweist und jedes Kettenglied der Endloskette zwei symmetrisch zur Mitte des Kettengliedes und im Abstand zueinander angeordnete in Laufrichtung liegende Führungsstege (5, 5') aufweist und zwischen beiden Führungsstegen (5, 5') ein die beiden Stege verbindendes tiefer liegendes Element angeordnet ist, das mit den Kettenzähnen (2) des Antriebsturas (1) kämmt, wobei die Führung (8) zwei parallel zur Laufrichtung der Endloskette liegende Schienen aufweist, deren jeweilige Innenseite im Führungsfall an der Außenseite des jeweiligen Führungssteges (5, 5') zu Anlage kommt,
**dadurch gekennzeichnet,**
**dass** die unmittelbar vor oder hinter dem Antriebsturas (1) angeordnete Führung (8) als kompaktes Verschwenkteil (9) ausgebildet und in einem Gestellteil (16,16') des Fahrwerksträgers befestigt ist und als Schienen zwei langgestreckte Stegbleche (10,10') aufweist, die bei Arbeitsstellung des Verschwenkteils (9) mindestens in Höhe des oberen Bereichs der Führungsstege (5,5') der einzelnen Kettenglieder (3) liegen.

2. Führung nach Anspruch 1,
**dadurch gekennzeichnet,**
**dass** das Verschwenkteil (9) zwischen zwei im Gestellteil (16,16') befestigten Lagerböcken (15,15') gelagert ist.

3. Führung nach Anspruch 1 und 2,
**dadurch gekennzeichnet,**
**dass** in der Achse (17) des Verschwenkteiles (9) eine Aufnahme (21) befestigt ist, in der ein Gummifederelement (18) anordenbar ist.

4. Führung nach einem der Ansprüche 1 bis 3,
**dadurch gekennzeichnet,**
**dass** auf der Innenseite (12,12') des jeweiligen Stegbleches (10,10') des Verschwenkteiles (9) lösbar Verschleißbleche (13,13') angeordnet sind.

5. Führung nach Anspruch 4,
**dadurch gekennzeichnet,**
**dass** die Befestigung der Verschleißbleche (13,13') über durch die Stegbleche (10,10') hindurchsteckbare und in die Verschleißbleche (13,13') einschraubbare Schrauben (14,14') erfolgt.

## Claims

1. Guide (8) for a continuous track - having a number of track links (3) - of a track-laying undercarriage, particularly for cranes, which undercarriage has an undercarriage support, at least one head sprocket (1) with sprocket teeth (2), a guide wheel if necessary, and several rollers (7), and each link of the continuous track has two guide bars (5, 5'), lying in the direction of travel, positioned symmetrically to the centre of the link and at a distance from each other, and a lower-lying element that links the two guide bars (5, 5') is positioned between the guide bars, which element meshes with the teeth (2) of the head sprocket (1), the guide (8) having two rails lying parallel to the direction of travel of the continuous track, the inside of each rail resting up against the outside of the corresponding guide bar (5, 5') when guiding is taking place,
**characterised in that**
the guide (8), positioned directly in front of or behind the head sprocket (1), is in the form of a compact swivel piece (9), and is secured in a frame piece (16, 16') of the undercarriage support, and has two web plates (10, 10') as rails, extending lengthwise, which are positioned, in the operating position of the swivel piece (9), at least at the level of the upper area of the guide bars (5, 5') of the individual links (3).

2. Guide as in Claim 1,
**characterised in that**
the swivel piece (9) is mounted between two brackets (15, 15') which are secured in the frame piece (16, 16').

3. Guide as in Claim 1 and 2,
**characterised in that**
a holding fixture (21) is secured in the axle (17) of the swivel piece (9), in which fixture can be placed a rubber spring element (18).

4. Guide as in one of Claims 1 to 3,
**characterised in that**
detachable wearing plates (13, 13') are positioned on the inside (12, 12') of each web plate (10, 10') of the swivel piece (9).

5. Guide as in Claim 4,
**characterised in that**
the securing of the wearing plates (13, 13') is effected by means of bolts (14, 14') which can be passed through the web plates (10, 10') and screwed into the wearing plates (13, 13').

## Revendications

1. Dispositif de guidage (8) pour une chaîne sans fin, présentant plusieurs patins (3), d'un véhicule à chenilles, en particulier pour des grues, qui présente un support de mécanisme de roulement, au moins un barbotin (1) muni de dents (2), le cas échéant une roue directrice, et plusieurs galets de roulement (7), et chaque patin de la chaîne sans fin présente deux âmes de guidage (5, 5') s'étendant dans la direction d'avance, agencées symétriquement par rapport au centre du patin et à distance l'une par rapport à l'autre et, entre les deux âmes de guidage (5, 5'), est agencé un élément plus profond reliant les deux âmes, qui engrène avec les dents (2) du barbotin, le dispositif de guidage (8) présentant deux rails s'étendant parallèlement à la direction d'avance de la chaîne sans fin, dont le côté interne respectif, dans le cas du guidage, vient en engagement sur le côté externe de l'âme de guidage respective (5, 5'),
**caractérisé en ce que** le dispositif de guidage (8) agencé directement devant ou derrière le barbotin est réalisé comme pièce pivotante compacte (9) et est fixé dans une partie de bâti (16, 16') du support du mécanisme de roulement et présente, comme rails, deux âmes allongées (10, 10') qui, dans la position de travail de la pièce pivotante (9) se trouvent au moins à hauteur de la zone supérieure des âmes de guidage (5, 5') des patins individuels (3).

2. Dispositif de guidage selon la revendication 1,
**caractérisé en ce que** la pièce pivotante (9) est montée entre deux paliers (15, 15') fixés à la partie de bâti (16, 16').

3. Dispositif de guidage selon la revendication 1 ou 2,
**caractérisé en ce que**, dans l'axe (17) de la pièce pivotante (9), est fixé un récepteur (21) dans lequel un élément élastique en caoutchouc (18) peut être agencé.

4. Dispositif de guidage selon une des revendications 1 à 3,
**caractérisé en ce que**, sur le côté interne (12, 12') de l'âme respective (10, 10') de la pièce pivotante (9), sont agencées, de façon amovible, des tôles d'usure (13, 13').

5. Dispositif de guidage selon la revendication 4,
**caractérisé en ce que** la fixation des tôles d'usure (13, 13') est effectuée par l'intermédiaire de vis (14, 14') pouvant être introduites à travers les âmes (10, 10') et pouvant être vissées dans les tôles d'usure (13, 13').
